Europäisches Patentamt

European Patent Office

Office européen des brevets

(11) Publication number: **0 232 079**
**B1**

# EUROPEAN PATENT SPECIFICATION

(45) Date of publication of patent specification: **02.01.91**

(21) Application number: **87300549.0**

(22) Date of filing: **22.01.87**

(51) Int. Cl.⁵: **B 01 D 61/46**

(54) Flow spacers for electrodialysis apparatus and method for making them.

(30) Priority: **24.01.86 US 822076**

(43) Date of publication of application:
**12.08.87 Bulletin 87/33**

(45) Publication of the grant of the patent:
**02.01.91 Bulletin 91/01**

(84) Designated Contracting States:
**AT BE CH DE FR GB IT LI NL SE**

(56) References cited:
**DE-A-1 934 137**
**US-A-3 933 617**
**US-A-4 303 493**

(73) Proprietor: **MORTON INTERNATIONAL, INC.**
**110 North Wacker Drive**
**Chicago Illinois 60606 (US)**

(72) Inventor: **Krulik, Gerald A.**
**25142 Barents Street**
**Laguna Hills California 92653 (US)**

(74) Representative: **Bankes, Stephen Charles Digby et al**
**BARON & WARREN 18 South End Kensington London W8 5BU (GB)**

## Description

This invention relates to electrodialysis apparatus including alternated layers of metal electrodes, flow spacers, and permselective membranes, all pressed tightly together in a stack. In such apparatus different liquids under pressure flow through separate chambers. As a consequence, leak-fee operation is an essential requirement.

Electrodialysis apparatus has been used for the concentration or the demineralization of electrolytes from diverse solutions containing electrolytes such as saline water, electroplating waste, radioactive waste, organic acid solutions and the like. In such electrodialysis apparatus, it is quite important to prevent leakage of the different liquids from one cell compartment to another since such leakage may cause contamination of the dialyzed liquid and render the electrodialysis operation inoperable or diminish its efficiency. It is important, also, to prevent external leakage, as from the areas between the cell compartments, particularly where the liquids may have acid, alkali or other toxic properties contaminating to the environment.

Various proposals have been made in the prior art for preventing leakage of the liquids between and from cell compartments in electrodialysis apparatus. Thus, the use of multi-ply membrane spacers is disclosed in U.S. Patent No. 3,878,086 issued to David B. Haswell et al. on April 15, 1975 and in U.S. Patent No. 4,319,978 issued to William G. Millman on March 16, 1982. In Patent 3,878,086 the outer plies are selected to be more rigid than those in the interior and are held together by a water-resistant pressure-sensitive adhesive. The resultant spacer is adhesively bonded to membranes on each of the sides thereof. The plies in Patent 4,319,978 are held together by a water-resistant pressure sensitive adhesive with the outer plies being made of compressible material and those in the interior of more rigid material. The spacer so formed is assembled in a stack without being adhesively bonded to the membranes thus facilitating disassembly of the stack for servicing without tearing ofsmhe membranes that tends to result when the membranes are adhesively bonded to the spacer as in Patent 3,878,978.

In U.S. Patent No. 3,933,617 issued to Tosinori Yamomoto et al., low leakage of liquid between the cells of a filter-press type electrodialysis apparatus is attributed to the feeding and discharge means of the cell being formed separately from the body of the cell frame and made of a rigid material having a thickness preferably less than that of the cell frame. The cell frame is formed of elastic material whereby, upon assembly, the cell frames are compressed while the feeding and discharge means are substantially non-compressed.

U.S. Patent No. 4,217,200 issued to Ora Kedem et al. on August 12, 1980 discloses a membrane unit for use in electrodialysis apparatus comprising a heat-sealable frame framing and forming an integral entity with an electrodialysis membrane.

U.S. Patent No. 4,303,493 issued to Klemens Kneifel et al. on December 1, 1981, discloses sealing layers or coatings of foamed epoxy resin applied by a screen printing method adjacent or adjoining sealing surfaces of the sealing frame such as the chamber bores and supply and discharge channels.

In US—A—4600493 there is disclosed an electrodialysis apparatus comprising alternated layers of metal electrodes, Teflon flow spacers and thin Teflon gaskets, all pressed tightly together. (The generic name for Teflon, which is a trademark of E.I. Dupont deNemours and Company, is polytetrafluoroethylene or PTFE). High pressure liquids of three types flow through the separate compartments of the apparatus, the Teflon gaskets being provided to preclude leakage.

Such prior art arrangements for achieving leak-free operation are characterized by a number of disadvantages. They are overly complicated requiring additional components such as separate gaskets or other sealing layers or complicated structures including, in some cases, water-resistant pressure sensitive adhesives that add undesirably to the cost of manufacture and assembly and disassembly when necessary for servicing, and moreover, tend to increase the likelihood of operation failure.

Thus, there exists a need and a demand in the art for simplification and improvement in electrodialysis apparatus to the end of achieving leak-free operation which is necessary for the successful commercial operation of the apparatus. The present invention was devised to fill the technological gap that exists in this respect.

According to a first aspect of the present invention there is provided a method of making a flow spacer frame for an electrodialytic cell from a flat workpiece of inert material having the desired thickness and outer dimensions for the spacer frame and with a window formed therethrough to provide a flow space within the cell, the window being surrounded and defined by inner peripheral edges of border portions, which method comprises the following steps:

a) before or after the formation of the window, etching both sides of the border portions;

b) machining the inner peripheral edges of the border portions to provide smooth surfaces thereat to prevent electrodeposition thereon; and

c) coating the etched border portions with a thin layer of inert grease to provide a leak-free seal when the resulting flow spacer frame is placed under pressure in face-to-face relation with a substantially identical flow spacer frame with a permselective membrane therebetween in making the electrodialytic cell.

According to a further aspect, the invention provides a flow spacer frame for an electrodialytic cell comprising:

a flat frame having border portions surrounding a window formed to provide a flow space within the cell wherein the inner peripheral edge surfaces of the border portions which define the window are made smooth to prevent electrodeposition thereon and the border portions have etched surfaces on both sides thereof to provide a leak-free seal when said frame is placed under pressure in face-to-face relation with a substantially identical flow spacer frame with an inert grease on the adjacent etched border portions of said frames, and with a permselective membrane therebetween.

There is thus provided a flow spacer frame structure which structure imparts leak-free operation of the electrodialysis apparatus in a simple and efficient, cost-effective, way. This structure also enables a significant reduction in the cost of manufacture and assembly of the apparatus, and facilitates disassembly of the apparatus for servicing, when and if necessary, while minimizing any tendency to damage of the membranes or other apparatus components.

The invention also allows the elimination of the Teflon gaskets that are used in the assembly disclosed in US—A—4600493, thereby significantly reducing the number of components that are required. This becomes of particularly significant importance in the commercial scale up of the apparatus.

The flow spacer frames of the electrodialysis apparatus, which apparatus may be similar to that disclosed in the aforementioned US—A—4600493, are preferably made of plastics material, more especially Teflon. The etching may be effected by known means to provide the desired microroughening, for example, chemical means such as those that are employed in the printed circuit industry to microooughen nonconductive articles, particularly plastic articles employed as substrates for printed circuit boards, to provide bonding sites for electroless copper plating. Typically, such etching is an inorganic etching with a strong acid or base.

Im a preferred embodiment, the improve electrodialysis flow spacer frame structures of the present invention made by a method involving the steps of:

(a) etching both sides of a Teflon workpiece or blank having the desired thickness and outer dimensions desired for the flow spacer frame;

(b) cutting out a window in the etched workpiece with the dimensions of the window being those desired for the electrodialysis apparatus flow space, leaving a substantial border portion surface surrounding the window;

(c) machining the inner peripheral edges of the border portion of the etched workpiece to provide smooth surfaces thereat; and

(d) coating the etched border portion surfaces of the workpiece with a thin layer of an inert grease such as silicone grease.

When the flow spacer frame structure resulting from the practice of this method according to the present invention is placed under pressure in face-to-face relation with a substantially indentical flow frame structure coated with a thin layer of inert grease on the adjacent etched border portion surfaces of the frame structures and with an electrodialysis permselective membrane therebetween, a leak-free seal is obtained between the permselective membrane and the adjacent etched border portion surfaces of the flow spacer frame structures even though only moderate pressure is used to compress the frame structures together.

Such a leak-free seal is also obtained when the resulting flow spacer structure is placed under similar pressure in face-to-face relation with a dimensionally stable and planar metallic cathode or anode or with a Teflon or other plastic planar end plate used in an electrodialysis assembly for holding the various components together under pressure in stacked relation.

Being smooth as a result of the machining thereof, the inner peripheral edge surfaces of each such flow spacer frame are substantially free of any tendency for the electrodeposition thereon of metal involved in the operation of the electrodialysis apparatus, for example, the plating out of copper thereon in an electrodialysis apparatus fused for the chemical maintenance of electroless copper plating baths.

In another contemplated embodiment of the invention, a Teflon flow spacer frame with a window machined therein may have an etch applied to the border portion surfaces on both sides thereof, following which etching the inner peripheral edges of the border portion may be machined to provide smooth surfaces thereat, and the etched border surfaces coated with a thin layer of silicone grease. The flow spacer frame structure produced according to this method is substantially indentical to that produced according to the method first described above and is operable to provide a leak-free seal in electrodialysis apparatus, as above described.

With this summary of the invention, a detailed description follows with reference being made to the accompanying drawings which form part of the specification, of which:

Fig. 1 is a schematic exploded view illustrating a single electrodialytic cell unit utilizing the leak-free etched Teflon flow spacer structure according to the present invention; and

Fig. 2 is a plan view of one of the leak-free etched Teflon flow spacer structures of Fig. 1.

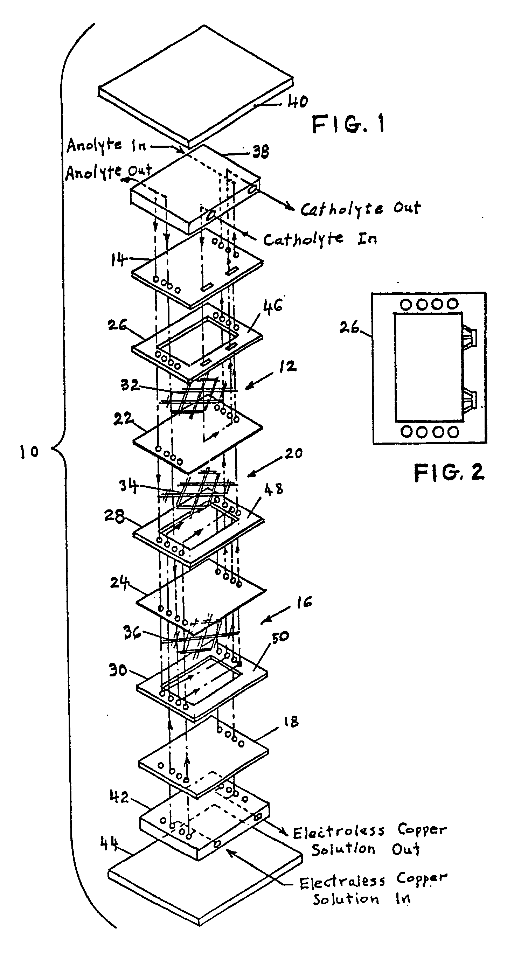

Referring not to the drawings and more particularly to Fig. 1 thereof, an apparatus comprising a three-compartment electrodialytic cell 10 for chemically maintaining an electroless copper plating bath is shown as including a cathode compartment 12 which contains a dimensionally stable planar cathode electrode 14, an anode compartment 16 which contains a dimensionally stable planar anode electrode 18, and an intermediate electroless copper or regenerating compartment 20. Compartment 20 is defined by anion permselective membranes 22 and 24 which separate the electroless copper compartment 20 from the cathode compartment 12 and the anode compartment 16, respectively. A first flow spacer frame 26, a plan view of which is shown in Fig. 2, separates membrane 22 from cathode 14. A second similar flow spacer frame 28 separates membrane 22 from membrane 24. A third similar flow spacer frame 30 separates membrane 24 from the anode 18. The three flow spacer frames may be substantially identical except for the arrangement of flow passageways or ports through the border portions thereof as required for the passage of different solutions in each of the three compartments 12, 16 and 20, in a manner known in the art and fully explained in the aforementioned US—A—4600493.

While, for convenience of illustration, the several components of the electrodialytic cell have been shown in spaced apart relation in Fig. 1, it will be understood that in a practical embodiment thereof these components would be arranged in a closed system in a closely packed and essentially solid relation, with perforated spacers 32, 34 and 36 positioned in the window opening of frames 26, 28 and 30, respectively, providing physical support for the membranes 22 and 24. For maintaining the electrodialytic cell 10 in such closely packed relation there is provided at the cathode end of the stack a plastic press block 38 and a steel backup plate 40. A similar plastic press block 42 and steel backup plate 44 are provided at the anode end of the stack. Suitable steel rods (not shown) extending between the steel plates 40 and 44 may be provided to hold various components of the electrodialytic cell together under pressure.

In accordance with the invention, the borders surfaces of each of the flow spacer frames 26, 28 and 30 are conditioned by etching in known manner, as described hereinbefore, to provide thereon, on both sides of the border surfaces, microroughened surfaces, for example, that are visibly roughened when viewed under a 10X lens. The microroughened border surfaces of frames 26, 28 and 30 that are visible in Fig. 1 of the drawing have been designated by reference number 46, 48 and 50, respectively. It will be understood that the opposite sides of frames 26, 28 and 30 that are not visible in the drawing are also microroughened by etching.

Before assembly of the electrodialytic cell 10, the etched or roughened border surfaces on both sides of the frames 26, 28 and 30 are coated with a thin layer of an inert grease, silicone grease being preferred since it has been found to coat the etched border surfaces uniformly and reliably.

When the resulting flow spacer frame structures 26, 28 and 30 are assembled to form an electrodialytic cell such as the electrodialytic cell 10, and placed under pressure, as shown, in face-to-face relation with the anion permselective membranes 22 and 24, the cathode electrode 14 and the anode electrode 18, a leak-free seal is obtained between the permselective membranes 22 and 24 and the respectively associated frame structures 26, 28 and 28, 30, between frame structure 26 and cathode electrode 14, and between frame structure 30 and anode electrode 18. In an operative embodiment of the invention no leaks of any kind were found, even though only moderate pressure was used to compress the electrodialysis stack.

It will be understood that, if desired, the border surfaces of the plastic blocks 38 and 42 adjacent the respectively associated cathode electrode 14 and anode electrode 18 may also be etched and coated with silicone grease, particularly in the region of the passageways or ports that are provided therein for the flow of the various solutions, thereby to preclude any leakage or seepage in these regions.

Thus, in accordance with the invention, there has been provided an improved leak-free electrodialysis apparatus flow spacer frame structure and a method for the making thereof. The improved flow spacer frame structure is characterized not only by the relative ease of manufacture thereof in a simple, efficient and cost-effective way, but also by the ability thereof to impart leak-free operation to the cell while enabling the use of Teflon sealing gaskets as used in the prior art to be dispensed with. While the invention has been illustrated in the drawing in connection with use thereof in a single electrodialytic cell, it will be understood it may be employed efficaciously in electrodialysis apparatus made up of a number of electrodialytic cells that may be connected in series, parallel, or series-parallel arrangements in a manner known in the art.

**Claims**

1. A method of making a flow spacer frame (26, 28, 30) for an electrodialytic cell (10) from a flat workpiece of inert material having the desired thickness and outer dimensions for the spacer frame and with a window formed therethrough to provide a flow space within the cell, the window being surrounded and defined by inner peripheral edges of border portions (46, 48, 50), which method comprises the following steps:

a) before or after the formation of the window, etching both sides of the border portions;

b) machining the inner peripheral edges of the border portions (46, 48, 50) to provide smooth surfaces thereat to prevent electrodeposition thereon; and

c) coating the etched border portions with a thin layer of inert grease to provide a leak-free seal when the resulting flow spacer frame is placed under pressure in face-to-face relation with a substantilly identical flow spacer frame with a permselective membrane (22, 24) therebetween in making the electrodialytic cell.

2. A method according to claim 1, wherein the etching of said border portions (46, 48, 50) of said flow spacer frame is effected chemically.

3. A method according to claim 2 wherein said flow spacer frame is made of a plastics material.

4. A method according to claim 3 wherein said flow spacer is made of tetrafluoroethylene and the inert grease is a silicone grease.

5. A method according to any preceding claim wherein the window is cut out from the flat workpiece after the etching of the border portions.

6. A method of making an electrodialytic cell wherein a plurality of flow spacer frames made by a method according to any preceding claim are assembled in a closely packed closed system stack (10) with permselective membranes (22, 24) between them to form the various electrodialysis compartments (12, 16, 20) with the thickness of each of said flow spacer frames corresponding to the depth of the respective electrodialysis cell compartment.

7. A flow spacer frame for an electrodialytic cell comprising:

a flat frame (26, 28, 30) having border portions (46, 48, 50) surrounding a window formed to provide a flow space within the cell wherein the inner peripheral edge surfaces of the border portions which define the window are made smooth to prevent electrodeposition thereon and the border portions have etched surfaces on both sides thereof to provide a leak-free seal when said frame is placed under pressure in face-to-face relation with a substantially identical flow spacer frame with an inert grease on the adjacent etched border portions of said frames, and with a permselective membrane (22, 24) therebetween.

8. A flow spacer frame according to claim 7 which is made of plastics material.

9. A flow spacer frame according to claim 8 wherein the border portion surfaces of said plastics frame are etched chemically.

10. A flow spacer frame according to claim 8 or claim 9 wherein the material of which said plastics frame is made is polytetrafluoroethylene.

11. A plurality of flow spacer frames according to any of claims 7 to 10, assembled in a closely packed closed system stack (10) with a silicon grease on the etched border portion surfaces thereof and with permselective membranes between them to form cell compartments (12, 16, 20) of an electrodialytic cell the thickness of each of the flow spacer frames corresponding to the depth of the respective cell compartment.

12. Electrodialysis apparatus comprising fluid-containing cells formed of alternate membranes (22, 24) and frame members (26, 28, 30) having border surfaces (46, 48, 50) and stacked and pressed together in face-to-face relation to form a consolidated apparatus.

characterized in that the border surfaces of adjacent frame members are etched and coated with an inert grease for precluding leakage or seepage of fluid between and from said cells (12, 16, 20) of said apparatus.

13. Electrodialysis apparatus as set forth in claim 12 wherein said frame members are made of plastics.

14. Electrodialysis apparatus as set forth in claim 12 wherein said frame members are made of tetrafluorethylene and said inert grease is silicone grease.

**Patentansprüche**

1. Ein Verfahren zur Herstellung eines Durchflußdistanzierrahmens (26, 28, 30) für eine elektrodialytische Zelle (10) aus einem flachen Werkstück inerten Materials mit der für den Distanzierrahmen gewünschten Dicke und den dafür gewünschten Außenmaßen und mit einem durch diesen hindurchgebildeten Fenster, um einen Durchflußraum innerhalb der Zelle zu bilden, bei dem das Fenster durch periphere Innenränder von Randteilen (46, 48, 50) umgeben und abgegrenzt wird, wobei das besagte Verfahren die folgenden Stufen umfaßt:

a) Ätzen beider Seiten der Ranteile vor oder nach der Bildung des Fensters;

b) Bearbeitung der peripheren Innenränder der Randteile (46, 48, 50), um an diesen zwecks Verhütung galvanischer Abscheidung darauf glatte Oberflächen herzustellen; und

c) Beschichtung der geätzten Randteil mit einer dünnen Schicht inerten Fetts, um eine leckfreie Dichtung zu erzielen, wenn bei der Herstellung der elektrodialytischen Zelle der sich ergebende Durchflußdistanzierrahmen unter Druck mit einem im wesentlichen identischen Durchflußdistanzierrahmen mit einer permselektiven Membran (22, 24) dazwischen in Fläche-auf-Fläche-Beziehung gebracht wird.

2. Ein Verfahren nach Anspruch 1, bei dem das Ätzen der besagten Randteile (46, 48, 50) des besagten Durchflußdistanzierrahmens auf chemischem Wege bewirkt wird.

3. Ein Verfahren nach Anspruch 2, bei dem der besagte Durchflußdistanzierrahmen aus einem Kunststoff besteht.

4. Ein Verfahren nach Anspruch 3, bei dem der besagte Distanzierrahmen aus Tetrafluoräthylen besteht und das inerte Fett ein Silikonfett ist.

5. Ein Verfahren nach einem der vorstehenden Ansprüche, bei dem das Fenster nach dem Ätzen der Randteile aus dem flachen Werkstück ausgeschnitten wird.

6. Ein Verfahren zur Herstellung einer elektrodialytischen Zelle, bei dem eine Mehrzahl von nach einem Verfahren im Einklang mit einem der vorstehenden Ansprüche gefertigten Durchflußdistanzierrahmen in einem dicht zusammengesetzten, ein geschlossenes System bildenden Stapel (10) mit zwecks Bildung der verschiedenen Elektrodialysekammern (12, 16, 20) dazwischen befindlichen permselektiven Membranen (22, 24) zusammengebaut wird, wobei die Dicke jedes der besagten Durchflußdistanzierrahmen der Tiefe der betreffenden Elektrodialysezellenkammer entspricht.

7. Ein Durchflußdistanzierrahmen für eine elektrodialytische Zelle umfassend:

einen flachen Rahmen (26, 28, 30) mit Randteilen 46, 48, 50) rings um ein Fenster, das so beschaffen ist, daß es einen Durchflußraum innerhalb der Zelle bildet, wobei die Oberflächen der peripheren Innenränder der Randteile, die das Fenster abgrenzen, glattgemacht werden, um galvanische Abschiedung darauf zu verhüten, und die Randteile zu beiden Seiten davon geätzte Oberflächen aufweisen, um eine leckfreie Dichtung zu ergeben, wenn der besagte Rahmen unter Druck mit einem im wesentlichen identischen Durchflußdistanzierrahmen mit einem inerten Fett an den anschließenden geätzten Randteilen der besagten Rahmen und mit einer permselektiven Membran (22, 24) dazwischen in Fläche-auf-Fläche-Beziehung gebracht wird.

8. Ein Durchflußdistanzierrahmen nach Anspruch 7, der aus einem Kunststoff besteht.

9. Ein Durchflußdistanzierrahmen nach Anspruch 8, bei dem die Randteiloberflächen des besagten Kunststoffrahmens chemisch geätzt sind.

10. Ein Durchflußdistanzierrahmen nach Anspruch 8 oder Anspruch 9, bei dem das Material, aus dem der besagte Kunststoffrahmen besteht, Polytetrafluoräthylen ist.

11. Eine Mehrzahl von Durchflußdistanzierrahmen nach einem der Ansprüche 7 bis 10, in einem eng zusammengesetzten, ein geschlossenes System bildenden Stapel (10) zusammengebaut, wobei sich ein Silikonfett an den geätzten Randteiloberflächen der besagten Rahmen befindet und permselektive Membranen dazwischen angeordnet sind, um Zellenkammern (12, 16, 20) einer eletkrodialytischen Zelle zu bilden, während die Dicke jedes der Durchflußdistanzierrahmen der Tiefe der betreffenden Zellenkammer entspricht.

12. Ein Elektrodialysegerät, umfassend Flüssigkeit enthaltende Zellen, die sich aus wechselweisen Membranen (22, 24) und Rahmenelementen (26, 28, 30) mit Randoberflächen (46, 48, 50) zusammensetzen und in Fläche-auf-Fläche-Beziehung gestapelt und zusammengepreßt sind, so daß sie ein konsolidiertes Gerät bilden, dadurch gekennzeichnet, daß die Randflächen aneinander anschließender Rahmenteil geätzt und mit einem inerten Fett beschichtet sind, um das Lecken bzw. Sickern von Flüssigkeit zwischen und von den besagten Zellen (12, 16, 20) des besagten Geräts zu verhüten.

13. Ein Elektrodialysegerät nach Anspruch 12, bei dem die besagten Rahmenelemente aus Kunststoff bestehen.

14. Ein Elektrodialysegerät nach Anpsruch 12, bei dem die besagten Rahmenelemente aus Tetrafluoräthylen bestehen und das besagte inerte Fett Silikonfett ist.

**Revendications**

1. Méthode de fabrication d'un bâti entretoise d'écoulement (26, 28, 30) pour une cellule électrodialytique (10) à partir d'une pièce plate de matériau inerte ayant l'épaisseur et les dimensions extérieures voulues pour le bâti entretoise et dans laquelle est formée une fenêtre devant constituer un espace d'écoulement à l'intérieur de la cellule, la fenêtre étant entourée et définie par les bords périphériques intérieurs d'éléments d'encadrement (46, 48, 50), ladite méthode comprenant les étapes suivantes:

a) avant ou après la formation de la fenêtre, décapage des deux faces des éléments d'encadrement;

b) usinage des bords périphériques intérieurs des éléments d'encadrement (46, 48, 50) pour leur conférer des surfaces lisses afin d'empêcher l'électrodéposition sur lesdits bords; et

c) revêtement des éléments d'encadrement décapés d'une mince couche de graisse inerte pour assurer un joint étanch lorsque le bâti entretoise d'écoulement résultant est mis sous pression en relation face à face avec un bâti d'écoulement sensiblement identique, une membrane permsélective (22, 24) étant interposée entre eux dans la réalisation de la cellule électrodialytique.

2. Méthode selon la revendication 1 dans laquelle le décapage desdits éléments d'encadrement (46, 48, 50) dudit bâti entretoise d'écoulement est réalisé chimiquement.

3. Méthode selon la revendication 2 dans laquelle ledit bâti entretoise d'écoulement est réalisé en matière plastique.

4. Méthode selon la revendication 3 dans laquelle ladite entretoise d'écoulement est réalisée en tétrafluoroéthylène et la graisse inerte est une graisse siliconée.

5. Méthode selon l'une quelconque des revendications précédentes dans laquelle la fenêtre est découpée dans la pièce plate après le décapage des éléments d'encadrement.

6. Méthode de réalisation d'une cellule électrodialytique dans laquelle plusieurs bâtis entretoises d'écoulement réalisés par une méthode selon l'une quelconque des revendications précédentes sont assemblés en un empilement en système étroitement fermé (10), des membranes permsélectives (22, 24) étant interposés entre eux pour former les divers compartiments d'électrodialyse (12, 16, 20), l'épaisseur de chacun des bâtis entretoises d'écoulement correspondant à la profondeur du compartiment de cellule d'électrodialyse respectif.

7. Bâti entretoise d'écoulement pour cellule électrodialytique comprenant:

un cadre plat (26, 28, 30) ayant des éléments d'encadrement (46, 48, 50) entourant une fenêtre formée pour constituer un espace d'écoulement à l'intérieur de la cellule, dans lequel les surfaces du bord périphérique intérieur des éléments d'encadrement qui définissent la fenêtre sont rendues lisses pour empêcher qu'il ne s'y forme d'électrodéposition et où les éléments d'encadrement ont des surfaces décapées des deux côtés pour assurer un joint étance lorsque ledit bâti est mis sous pression en relation face à face avec un encadrement entretoise d'écoulement sensiblement identique, une graisse inerte étant appliquée sur les éléments d'encadrement décapés adjacents desdits bâtis, et une membrane permsélective (22, 24) étant interposée entre eux.

8. Bâti entretoise d'écoulement suivant la revendication 7 qui est réalisée en matière plastique.

9. Bâti entretoise d'écoulement selon la revendication 8 dans lequel les surfaces des éléments d'encadrement dudit bâti en plastique sont décapés chimiquement.

10. Bâti entretoise d'écoulement selon la revendication 8 ou 9 dans lequel la matière dont est constitué ledit bâti en plastique est du polytétrafluoroéthylène.

11. Plauralité de bâtis entretoises d'écoulement selon l'une quelconque des revendications 7 à 10, assemblés en une pile à systéme fermé étroitement serré (10) comportant une graisse siliconée sur les surfaces décapées de ses éléments d'encadrement et des membranes permsélectives entre eux pour former des compartiments de cellule (12, 16, 20) d'une cellule électrodialytique où l'épaisseur de chacun des bâtis entretoises d'écoulement correspond à la profondeur du compartiment de cellule respectif.

12. Appareil d'électrodialyse comprenant des cellules contenant un fluide, formées de membranes (22, 24) et d'éléments de bâti (26, 28, 30) alternés ayant des surfaces d'encadrement (46, 48, 50) et empilés et pressés ensemble en relation face à face pour former un appareil unifié

caractérisé en ce que les surfaces de contact des éléments de bâti adjacents sont décapées et revêtues d'une graisse inerte pour empêcher les fuites ou le suintement du fluide desdites cellules (12, 16, 20) dudit appareil et entre lesdites cellules.

13. Appareil d'électrodialyse selon la revendication 12 dans lequel lesdits éléments de bâti sont réalisés en matière plastique.

14. Appareil d'électrodialyse selon la revendication 12 dans lequel lesdits éléments de bâti sont réalisés en tétrafluoroéthylène et où ladite graisse inerte est de la graisse siliconée.

FIG. 1

FIG. 2